# EUROPEAN PATENT SPECIFICATION

(11) **EP 4 077 872 B1**
(45) Date of publication and mention of the grant of the patent: **25.11.2026**
(21) Application number: 20821006.2
(22) Date of filing: 11.12.2020
(51) Int. Cl.: E21B 41/00, E21B 43/26

(54) **DOWNHOLE TOOL MEMBER COMPRISING A BRANCHED POLY(HYDROXYACID)**
BOHRLOCHWERKZEUGTEIL MIT EINER VERZWEIGTEN POLY(HYDROXYSÄURE)
ÉLÉMENT D'OUTIL DE FOND DE TROU COMPRENANT UN POLY(HYDROXYACIDE) RAMIFIÉ

(30) Priority: 18.12.2019 EP 19315161; 19.12.2019 US 201962950285 P
(43) Date of publication of application: 26.10.2022
(73) Proprietor: Syensqo Specialty Polymers USA, LLC, Alpharetta, GA 30005-3914 (US)
(72) Inventor: BENSON, Bryan, Ball Ground, GA 30107 (US); TOURAUD, Franck, 38780 Eyzin Pinet (FR); VANDERVEKEN, Yves, 3001 Leuven (BE)
(74) Representative: Benvenuti, Federica
(86) International application number: PCT/EP2020/085822
(87) International publication number: WO 2021/122391

(56) References cited:
- WO-A1-2010/112602
- WO-A1-2016/173640
- WO-A1-2018/115008
- US-A1- 2011 196 125
- US-A1- 2013 081 801
- US-A1- 2015 292 292

## Description

### Related applications

This application claims priorities filed on 18 December 2019 in Europe with Nr 19315161.0 and filed on 19 December 2019 in United States with Nr 62/950285.

### Technical Field

The present invention relates to an article which forms a tool per se or a component thereof for formation or repair of downholes for extraction of hydrocarbon resources including oil and gas.

### Background Art

Hydrocarbon resources such as petroleum or natural gas are known to be produced by excavation through wells (oil wells or gas wells, collectively called "wells") having a porous and permeable subterranean formation. In wells that are continuously excavated, the productive layer is stimulated in order to continuously excavate hydrocarbon resources efficiently from subterranean formations. One method for increasing the extraction of hydrocarbons relies on the generation of fractures (also called "fracturing" or "hydraulic fracturing") in the productive layer using fluid pressure.

Hydraulic fracturing is a method in which fractures are generated in the productive layer by fluid pressure such as water pressure (called "hydraulic pressure" hereinafter). Generally, a vertical hole is drilled, and then the vertical hole is curved and a horizontal hole is drilled in a subterranean formation several thousand meters underground. Fracturing fluid is then fed into these boreholes (meaning holes provided for forming a well, also called "downholes") at high pressure, and fractures are produced by the hydraulic pressure in the deep subterranean productive layer. The productive layer is thereby stimulated and the hydrocarbon resource is extracted through the fractures.

In order to perform the above-mentioned well treatments, normally the method below is employed. Specifically, a prescribed section of a borehole or downhole is partially plugged and fractures are produced or perforation is performed in the productive layer by feeding a fluid such as fracturing fluid at high pressure into the plugged section or using a tool containing an explosive compound such as a perforation gun. Then, the next prescribed section (typically ahead of the preceding section, i.e., a segment closer to the ground surface) is plugged, and fracturing and the like are performed, causing the fractures and perforations to advance. After that, this process is repeated until the required isolation, fracturing, and the like have been completed.

By "downhole tool", it is meant according to the present invention, a tool used to form a downhole (may be referred to as a "borehole", a "wellbore" or a "subterranean drilling bore") provided at the time of well drilling from above the ground (including above water) toward a production reservoir to acquire a hydrocarbon resource, and serving as a flow path of the hydrocarbon resource to recover the hydrocarbon resource after completion of the well.

The tools used to perform plugging and fracturing of a borehole, are among the tools known as "downhole tools". A downhole tool is typically not designed to be retrievable after use : it is removed by destruction or by making it into small fragments by milling, drill out, or another method, but substantial cost and time are required for milling, drill out, and the like.

Therefore, it has been recommended to form the whole tool or at least a component thereof (i.e. downhole tool member) with a degradable polymer to allow for the decomposition of the tool or tool member in the ground.

Poly(hydroxyacids), such as poly(glycolic acid) and poly(lactic acid) are among those polymers which are known to degrade. US2011/0196125A1 discloses degradable polymers comprising from about 20 to 80 mole percent monomer residues of a first monomer and of a second monomer selected from the goup consisting of L-lactic acid, D-lactic acid, L-lactide, D-lactide and glycolic acid and from 0.001 to about 32 mole percent residue of a compound capable of reacting with either the first or the second monomer to form an ester.

Downhole tools made of poly(glycolic acid) have been previously described. US9267351 discloses a downhole tool member comprising a shaped body of a poly(glycolic acid) polymer having a weight-average molecular weight of at least 70,000, having an effective thickness which is ½ or more of a critical thickness of surface decomposition, and exhibiting a thickness reduction rate in water which is constant with respect to time. The poly(glycolic acid) is described as glycolic acid homopolymer consisting only of a glycolic acid unit (-OCH₂-CO-) as a recurring unit, or a glycolic acid copolymer which includes other monomer units, such as hydroxy carboxylic acid units, preferably lactic acid units, in a proportion of at most 50 % weight. It is believed that these polymers have a linear architecture.

To increase the thickness reduction rate of the tool member in water over time, US9574418 teaches that compositions of poly(glycolic acid) with a short fiber reinforcement material, preferably in an amount of 1 to 50 parts per 100 parts of poly(glycolic acid), are required.

It has now been found that branched poly(hydroxyacids), notably certain branched poly(glycolic acid) polymers, can be successfully employed in the manufacture of downhole tool members which exhibit a thickness reduction rate in water which increases over time and which is higher than the thickness reduction rate in water of the downhole tool members made of the linear poly(glycolic acid) polymers of the prior art.

### Summary of invention

An object of the invention is a downhole tool member as defined in claim 1.

### The hydroxyacid (A)

The hydroxyacid (A) comprises glycolic acid ; and optionally at least one hydroxyacid (A) having only one hydroxyl group and only one carboxylic acid group different from the glycolic acid [hydroxyacid (A)], in an amount of at most 5 % moles, generally of at most 4 % moles, preferably at most 3 % moles; and/or said amount can be as low as 0.1 % moles, with respect to the sum of moles of glycolic acid and hydroxyacid (A).

### Acid (C)

Acid (C) is selected among carboxylic acids having one or two carboxylic groups and being free from hydroxyl groups. It is generally understood that better results are obtained with acids (C) wherein the total number of carbon atoms is at least 4, preferably at least 5 more preferably at least 6. Generally acid (C) possesses from 4 to 36 carbon atoms, preferably from 6 to 24 carbon atoms.

Among carboxylic acids having one carboxylic acid group which can be advantageously used as acid (C), mention can be notably made of aliphatic acids such as caprylic acid [CH₃(CH₂)₆-COOH], capric acid [CH₃(CH₂)₈-COOH], undecanoic acid [CH₃(CH₂)₉-COOH], dodecanoic or lauric acid [CH₃(CH₂)₁₀-COOH], tridecanoic acid [CH₃(CH₂)₁₁-COOH], tetradecanoic or myristic acid [CH₃(CH₂)₁₂-COOH], pentadecanoic acid [CH₃(CH₂)₁₃-COOH], hexadecanoic or palmitic acid [CH₃(CH₂)₁₄-COOH], octadecanoic or stearic acid [CH₃(CH₂)₁₆-COOH], arachidic acid [CH₃(CH₂)₁₈-COOH], behenic acid [CH₃(CH₂)₂₀-COOH]. An aliphatic acid (C) which has been shown to provide particularly good results is stearic acid, which is hence particularly preferred.

When acid (C) is an aromatic monocarboxylic acid, it is advantageously selected from the group consisting of benzoic acid, naphthoic acid and phenylacetic acid.

Among dicarboxylic acids which can be advantageously used as acid (C), mention can be made of succinic acid [HOOC-(CH₂)₂-COOH], glutaric acid [HOOC-(CH₂)₃-COOH], 2,2-dimethyl-glutaric acid [HOOC-C(CH₃)₂-(CH₂)₂-COOH], adipic acid [HOOC-(CH₂)₄-COOH], 2,4,4-trimethyl-adipic acid [HOOC-CH(CH₃)-CH₂-C(CH₃)₂-CH₂-COOH], pimelic acid [HOOC-(CH₂)₅-COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecanedioic acid [HOOC-(CH₂)₁₀-COOH], tetradecanedioic acid [HOOC-(CH₂)₁₁-COOH], octadecanedioic acid [HOOC-(CH₂)₁₆-COOH].

### The polyfunctional reactant (F)

Mixtures comprising at least one polyol (H) and at least one polyacid (O)

### The polyol (H)

The choice of polyol (H) is not particularly limited : any polyol comprising at least three hydroxyl groups and being free from carboxylic acid group may be used in the preparation of the branched poly(hydroxyacid).

Polyol (H) can be selected from the group consisting of:
- triols, in particularly selected from the group consisting of glycerol, trimethylolpropane, trimethylolbutane, 2,3-di(2'-hydroxyethyl)-cyclohexan-1-ol, hexane-1,2,6-triol, 1,1,1-tris(hydroxymethyl)ethane, 3-(2'-hydroxyethoxy)propane-1,2-diol, 3-(2'-hydroxypropoxy)-propane-1,2-diol, 2-(2'-hydroxyethoxy)-hexane-1,2-diol, 6-(2'hydroxypropoxy)-hexane-1,2-diol, 1,1,1-tris-[(2'-hydroxyethoxy)-methylethane, 1,1,1-tris-[(2'-hydroxypropoxy)-methyl-propane, 1,1,1-tris-(4'-hydroxyphenyl)ethane, 1,1,1-tris-(hydroxyphenyl)-propane, 1,1,5-tris-(hydroxyphenyl)-3-methylpentane, trimethylolpropane ethoxylate, trimethylolpropane propoxylate, tris(hydroxymethyl)aminomethane;
- tetraols, in particularly selected from the group consisting of diglycerol, di(trimethylolpropane), pentaerythritol, 1,1,4-tris-(dihydroxyphenyl)-butane;
- polyols comprising 5 hydroxyl groups, in particular triglycerol;
- polyols comprising 6 hydroxyl groups, in particular dipentaerythritol; and
- polyols comprising 8 hydroxyl groups, in particular tripentaerythritol.

Preferred polyols (H) are triols and tetraols. A polyol (H) which has been found to provide particularly good results within the frame of the present invention is trimethylolpropane.

### The polyacid (O)

Polyacid (O) comprises two aromatic carboxylic acid groups and is free from hydroxyl groups.

Examples of polycarboxylic aromatic acids are: phthalic acids, including isophthalic acid and terephthalic acid, 2,5-pyridinedicarboxylic acid, 2,4 pyridinedicarboxylic acid, 3,5-pyridinedicarboxylic acid, 2,2 bis(4 carboxyphenyl)propane, bis(4-carboxyphenyl)methane, 2,2 bis(4 carboxyphenyl)hexafluoropropane, 2,2-bis(4-carboxyphenyl)ketone, 4,4' bis(4-carboxyphenyl)sulfone, 2,2-bis(3-carboxyphenyl)propane, bis(3 carboxyphenyl)methane, 2,2-bis(3-carboxyphenyl)hexafluoropropane, 2,2 bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid, 1,4-naphthalene dicarboxylic acid, 2,3-naphthalene dicarboxylic acid, 1,8-naphthalene dicarboxylic acid.

Polyacids (O) which have been found to provide particularly good results within the frame of the present invention are phthalic acids, in particular isophthalic acid.

### Mixtures comprising at least one polyol (H) and at least one alcohol (AO)

Polyol (H) is as detailed above.

### The alcohol (AO)

Alcohol (AO) can be a monoalcohol (MO) comprising one hydroxyl group, a diol (D) comprising two hydroxyl groups or a mixture of a monoalcohol (MO) and of a diol (D).

When alcohol (AO) is a monoalcohol (MO), it can be selected from aliphatic or aromatic monoalcohols.

Monoalcohol (MO) is characterized by a boiling point at atmospheric pressure, advantageously of at least 90°C, preferably of at least 100°C, more preferably of at least 125°C and most preferably of at least 150°C.

Aliphatic monoalcohol (MO) is advantageously an aliphatic monoalcohol of formula below:

R_{Hm}-OH

wherein R_{Hm} is a monovalent aliphatic group having one or more than one carbon atom, in particular having 3 or more carbon atoms.

It is generally understood that better results are obtained with long chain aliphatic monoalcohols, i.e. aliphatic monoalcohols (MO) wherein the total number of carbon atoms is advantageously at least 6. The aliphatic monoalcohol (MO) possesses preferably from 6 to 36 carbon atoms and more preferably from 6 to 24 carbon atoms.

Among aliphatic monoalcohol (MO) which can be advantageously used in the present invention, mention can be notably made of hexanol-1 [CH₃(CH₂)₅-OH], dodecanol [CH₃(CH₂)₁₁-OH], hexadecanol or cetyl alcohol [CH₃(CH₂)₁₅-OH], octadecanol or stearyl alcohol CH₃(CH₂)₁₇-OH], arachidic alcohol CH₃(CH₂)₁₈-OH], docosanol or behenic alocohol [CH₃(CH₂)₂₁-OH], cyclohexanol and menthol.

When monoalcohol (MO) is an aromatic monoalcohol it is advantageously selected from the group consisting of phenol, cresol, naphthol, benzyl alcohol, 2-phenyl ethanol and 3-phenyl propanol.

Monoalcohol (MO) is preferably selected from the group consisting of dodecanol, benzyl alcohol, menthol and mixtures thereof.

When the alcohol (AO) is a diol (D), diol (D) is characterized by a boiling point at atomospheric pressure, advantageously of at least 100°C, preferably of at least 150°C, more preferably of at least 200°C and most preferably of at least 230°C.

Non limiting examples of suitable diols (D) are notably ethylene glycol, 2,2-dimethylpropane-1,3-diol, pentane-1,2-diol, pentane-1,5-diol, hexane-1,2-diol, heptane-1,2-diol, diethylene glycol, hexane-1,6-diol, heptane-1,7-diol, 1,4-cyclohexanediol, cis 1,2-cyclohexanediol, trans 1,2-cyclohexanediol, polyetherpolyol diols Dianol^{®} 220, 1,4-cyclohexane dimethanol, isosorbide, isoidide, dodecane 1,12-diol and mixtures thereof.

Diol (D) is preferably selected from the group consisting of diethyleneglycol, 1,4-cyclohexane dimethanol, isosorbide, isoidide, dodecane 1,12-diol and mixtures thereof.

The diol (D) is more preferably selected from the group consisting of diethyleneglycol, 1,4-cyclohexane dimethanol and mixtures thereof.

Diol (D) which has been shown to provide particularly good results is 1,4-cyclohexane dimethanol which is hence most particularly preferred, with a very particular preference to cis/trans isomer mixture of 1,4-cyclohexane dimethanol (CAS number 105-08-8).

Alcohol (AO) is preferably selected from the group consisting of diethyleneglycol, 1,4-cyclohexane dimethanol, isosorbide, isoidide, dodecane 1,12-diol, dodecanol, benzyl alcohol, menthol and mixtures thereof.

The branched poly(hydroxyacid) polymer

The branched poly(hydroxyacid) polymer used for the downhole tool member of the invention is obtained from the polycondensation reaction of a monomer mixture comprising:
(i) at least one hydroxyacid having only one hydroxyl group and only one carboxylic acid group [hydroxyacid (A)];
(ii) optionally at least one carboxylic acid having one or two carboxylic acid groups and being free from hydroxyl group [acid (C)], and
(iii) at least one polyfunctional reactant [reactant (F)] as detailed above.

The expression "branched polymer" is used herein with the meaning provided by IUPAC, that is to identify a polymer whose molecules are branched chains. In the present context, branching is introduced in the polymer chain by the presence of at least one polyfunctional reactant, reactant (F).

In a first embodiment of the invention, the branched poly(hydroxyacid) polymer is selected among those polymers obtained from the polycondensation reaction of a monomer mixture comprising glycolic acid; optionally, at least one hydroxyacid (A) different from glycolic acid, in an amount of at most 5 % moles, with respect to the sum of moles of glycolic acid and hydroxyacid (A); optionally at least one acid (C) having one carboxylic acid group; and at least one reactant (F) selected from mixtures comprising at least one polyol (H) comprising at least three hydroxyl groups and at least one polyacid (O) selected from the aromatic acids comprising two aromatic carboxylic acid groups. In particular those polymers wherein: the amount of polyol (H) is such that the number of hydroxyl groups thereof is comprised between 0.050 to 1.200 % with respect to the overall number of carboxyl groups of glycolic acid and the hydroxyacid (A), if present; the amount of polyacid (O) is such that the number of carboxylic acid groups thereof is comprised between 0.050 to 0.750 % with respect to the overall number of hydroxyl groups of glycolic acid and of the hydroxyacid (A), if present; and the amount of acid (C), when present, is such that the number of carboxylic acid groups thereof is comprised between 0.0001 to 0.010 % with respect to the overall number of hydroxyl groups of glycolic acid and of the hydroxyacid (A), if present.

Polyol (H) is typically selected among triols (in particular trimethylolpropane) and tetraols (in particular pentaerythritol). Preferably, polyol (H) is trimethylolpropane.

Non limiting examples of suitable polyacids (O) comprising two aromatic carboxylic acid groups are phthalic acids, including isophthalic acid and terephthalic acid, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene, naphthalene dicarboxylic acids, including 2,6-naphthalene dicarboxylic acid, 2,7-naphthalene dicarboxylic acid,1,4-naphthalene dicarboxylic acid, 2,3-naphthalene dicarboxylic acid, 1,8-naphthalene dicarboxylic acid. Phthalic acids are generally preferred. Isophthalic acid has shown to provide particularly good results.

Acid (C) is a monocarboxylic acid. Stearic acid is particularly preferred.

Polymers of the first embodiment are those described for instance in WO2018115008A1 and can be prepared according to the processes described therein.

In a second embodiment of the invention, the branched poly(hydroxyacid) polymer is selected among those polymers obtained from the polycondensation reaction of a monomer mixture comprising: glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); optionally, at least one acid (C), said acid (C) having one carboxylic acid group; optionally at least one polyacid (O); and at least one reactant (F) selected from mixtures comprising at least one polyol (H) and at least one alcohol (AO).

The branched poly(hydroxyacid) polymer is obtained from the polycondensation reaction of a monomer mixture consisting of: glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); at least one polyol (H); and at least one alcohol (AO), preferably at least one diol (D).

Most preferably, the branched poly(hydroxyacid) polymer is obtained from the polycondensation reaction of a monomer mixture consisting of: glycolic acid; optionally, at least one hydroxyacid (A) different from glycolic acid, wherein the molar amount of hydroxyacid (A) is of at most 5 % moles with respect to the sum of moles of glycolic acid and hydroxyacid (A); at least one polyol (H); and at least one diol (D).

The hydroxyacid (A) is advantageously selected from the group consisting of lactic acid, 3-hydroxybutyric acid, 4-hydroxybutyric acid, 4-hydroxyvaleric acid, 5-hydroxyvaleric acid, 6-hydroxycaproic acid; preferably lactic acid.

Preferred polyols (H) are triols, in particular triols selected from the group consisting of glycerol, trimethylolpropane and trimethylolbutane, and tetraols, in particular pentaerythritol, as above detailed.

A polyol (H) which has been found to provide particularly good results is trimethylolpropane.

Polyol (H) is used in an amount such that the number of hydroxyl groups thereof is advantageously comprised between 0.050 and 1.200 % with respect to the overall number of carboxyl groups of glycolic acid and of hydroxyacid (A), if present. Advantageously, polyol (H) is present in an amount such that the number of hydroxyl groups thereof is at least 0.075%, even at least 0.100%, preferably at least 0.120% with respect to the overall number of carboxyl groups of glycolic acid and of hydroxyacid (A), if present. Polyol (H) is present in an amount such that the number of hydroxyl groups thereof is at most 1.000%, even at most 0.750%, preferably at most 0.600 % with respect to the overall number of carboxyl groups of glycolic acid and of hydroxyacid (A), if present.

When the alcohol (AO) is a monoalcohol (MO), it is preferably selected from the group consisting of dodecanol, benzyl alcohol, menthol and mixtures thereof.

When the alcohol (AO) is a diol (D), diol (D) is preferably selected from the group consisting of diethyleneglycol, 1,4-cyclohexane dimethanol, isosorbide, isoidide, dodecane 1,12-diol and mixtures thereof, more preferably diethyleneglycol, 1,4-cyclohexane dimethanol and mixtures thereof.

Diol (D) which has been shown to provide particularly good results is 1,4-cyclohexane dimethanol which is hence most particularly preferred, with a very particular preference to cis/trans isomer mixture of 1,4-cyclohexane dimethanol (CAS number 105-08-8).

Alcohol (AO) is preferably selected from diethyleneglycol, 1,4-cyclohexane dimethanol, isosorbide, isoidide, dodecane 1,12-diol, dodecanol, benzyl alcohol, menthol and mixtures thereof.

Alcohol (AO) is more preferably a diol (D), which is preferably characterized by a boiling point at atmospheric pressure of at least 100°C and/or which is preferably used in an amount as defined below.

Alcohol (AO) is used in an amount such that the number of hydroxyl groups thereof is advantageously comprised between 0.010 and 1.200 % with respect to the overall number of carboxylic groups of glycolic acid and of the hydroxyacid (A), if present.

Alcohol (AO) is used in an amount such that the number of hydroxyl groups thereof is advantageously of at least 0.010 %, preferably of at least 0.050 %, more preferably of at least 0.080 % and most preferably of at least 0.100 % and/or advantageously of at most 1.200%, even at most 1.000%, preferably of at most 0.750 %, more preferably of at most 0.700 %, most preferably of at most 0.650 %, with respect to the overall number of carboxylic groups of glycolic acid and of the hydroxyacid (A), if present.

Advantageously, alcohol (AO) in an amount such that the number of hydroxyl groups thereof is of from 0.010 to 0.650 % with respect to the overall number of carboxylic groups of glycolic acid and of hydroxyacid (A).

The polyol (H) and the alcohol (AO) are used in an amount such that the total number of moles of hydroxyl groups thereof minus the total number of moles of carboxylic groups of glycolic acid and of hydroxyacid (A), if present, divided by the total number of moles of carboxylic groups of glycolic acid and of hydroxyacid (A), if present, is comprised advantageously between 0 and 1.0 %, preferably between 0.1 and 1.0 % and more preferably between 0.3 and 0.9 %.

Acid (C) is a monocarboxylic acid. Among aliphatic monoacids, stearic acid, which is particularly preferred. When acid (C) is an aromatic monoacid, it is advantageously selected from the group consisting of benzoic acid, naphthoic acid and phenylacetic acid.

When present, acid (C) is preferably an aromatic monoacid.

When present, acid (C) is a monoacid and it is used in an amount such that the number of carboxylic acid groups thereof is advantageously comprised between 0.010 and 2.0 % with respect to the overall number of hydroxyl groups of glycolic acid and of hydroxyacid (A), if present. Acid (C) is used in an amount such that the number of carboxylic acid groups thereof is advantageously of at least 0.010 %, preferably of at least 0.030 %, more preferably of at least 0.075 %, with respect to the overall number of hydroxyl groups of glycolic acid and of hydroxyacid (A), if present; and/or advantageously of at most 2.0 %, preferably of at most 1.50 %, more preferably of at most 1.20 %, most preferably of at most 1.00 %, even most preferably of at most 0.75 %, with respect to the overall number of hydroxyl groups of glycolic acid and of hydroxyacid (A),

The branched poly(hydroxyacid) polymer according to this fifth embodiment may optionally comprise recurring untis derived from at least one polyacid (O) as above defined. The polyacid (O) can comprise two carboxylic acid groups or more than two carboxylic acid groups, in particular three or four carboxylic acid groups.

Among suitable polyacids (O) mention may be made of phthalic acids, tricarballylic acid, butane-1,2,3,4 tetracarboxylic acid, 1,2,4,5- benzene tetracarboxylic acid (pyromellitic acid). The polyacid (O) is preferably an aromatic diacid, more preferably a phthalic acid and most preferably isophthalic acid.

When present, polyacid (O) is used in an amount such that the number of carboxylic acid groups thereof is comprised between 0.025 and 1.200 % with respect to the overall number of hydroxyl groups of glycolic acid and of the hydroxyacid (A), if present. When present, the polyacid (O) is used in amount such that the number of carboxylic acid groups thereof is of advantageously at least 0.025 %, preferably at least 0.050 % and more preferably at least 0.100 % and/or of advantageously at most 1.200 %, preferably at most 1.000 %, more preferably at most 0.900 %, most preferably at most 0.750 % and particularly most preferably at most 0.650 %, with respect to the overall number of hydroxyl groups of glycolic acid and of the hydroxyacid (A), if present. When present, an amount of polyacid (O) such that the number of carboxyl groups thereof is of from 0.150 to 0.550 % with respect to the overall number of hydroxyl groups of glycolic acid and of hydroxyacid (A), if present, has been found particularly useful.

The branched poly(hydroxyacid) polymer as above detailed, may be obtained by a method comprising polycondensing glycolic acid, optionally at least one hydroxyacid (A), at least one polyol (H), at least one alcohol (AO), optionally at least one acid (C) and optionally at least one polyacid (O). In said method, a polycondensation catalyst may optionally be added to the monomer mixture. Such polycondensation catalysts are well known to a person skilled in the art and may be selected, for example, from tin (II) chloride, stannous octoate, zinc acetate, zinc lactate, methanesulfonic acid, orthophosphoric acid and mixtures thereof. Methanesulfonic acid and mixtures of methanesulfonic acid with other catalysts, the ones disclosed above or others, are particularly preferred.

When added, such a catalyst is usually added in an amount of about 0.001 to 2 mol %, in particular of about 0.002 to 0.1 mol % with respect to the total moles of the monomers of the monomer mixtures.

Preferably, the step of polycondensing is carried out at least partly at a temperature such that the monomers' mixture and the formed growing polymer are in the molten phase. Generally, after a step of polycondensing in the molten state, providing for a pre-polymer possibly comprising unreacted glycolic acid, hydroxyacid (A) (when present), polyol (H), alcohol (AO), monoacid (C) (when present) and polyacid (O) (when present), polycondensation is then pursued at a temperature such that the pre-polymer is in the solid state (this step will be referred hereunder as solid state polymerization or SSP).

Hence, the method generally includes a first step of polymerization in the molten state to form a pre-polymer and a second step of solid state polymerization (SSP) for increasing molecular weight of the pre-polymer.

In the first step, the temperature is selected so as to maintain the monomer mixture and, with the progress of the reaction, the formed pre-polymer, in the molten state.

Generally, the first step of polycondensation in the molten state is accomplished under stirring, by maintaining the reaction mixture at temperatures ranging from 160 to 240°C.

The pre-polymer, possibly comprising residual monomers, as above detailed, obtained from first step of polymerization in the molten state undergoes a step of solidification and size reduction, so as to provide particulate pre-polymer material in the form of loose particles.

The particulate pre-polymer may be processed from the molten state under the form of pearls or pellets through standard techniques of pelletization and/or pastillation, or can be recovered as solidified crumbs and milled so as to provide powder.

When recovering pre-polymer, possibly comprising residual monomers, as above detailed, by solidification under the form of crumbs, a milling step is required. Such a milling step may be carried out by any means known to a person skilled in the art, for example by milling in a high-speed grinder or in a rotary mill.

The SSP step may take place by exposing the pre-polymer, possibly comprising residual monomers, as above detailed, in its solid state, either under vacuum or under an inert gas atmosphere (e.g. under nitrogen) or both, for one or more hours or even several days, at a temperature above the glass transition temperature of the said pre-polymer, possibly comprising residual monomers, as above detailed, but below its melting temperature. Typically, such a SSP step may be carried out at a temperature of 140 to 240°C, in particular of 150 to 230°C, for example at around 170-220°C and at a pressure below 50 mbar.

Depending on the nature of the residual monomer(s) in the pre-polymer, on their proportions and on the target final viscosity/molecular weight, on the temperature and on the pressure during the overall polycondensation step, the duration of the SSP step may be a few hours to 1 week, in particular from 6 to 200 h, for example of about 10 to 150 h.

Preferably, the polycondensation reaction in the molten phase takes place under vacuum in order to evaporate the water of reaction and prevent the latter from hydrolyzing the polymer chains being formed. Very particularly preferably, polycondensation reaction in the molten phase is initiated at atmospheric pressure and the vacuum is applied gradually until a pressure of the order of a few mbar, in particular less than 50 mbar, preferably less than 20 mbar, is achieved. The SSP step is typically carried out at a pressure of about 0.1 to 50 mbar, preferably of about 0.1 to 20 mbar.

### The downhole tool member

Object of the invention is a downhole tool member comprising at least one element comprising the branched poly(hydroxyacid) as detailed above.

The expressions "downhole tool", "downhole tool member" or "element of a downhole tool member" are used to refer to a piece of oilfield equipment that is used during drilling, completion or repair of downholes, including the tools used to perform plugging and fracturing of a borehole.

Notable, non limiting examples of downhole tools and/or downhole tool members and/or element of a downhole tool member are for instance frac plugs or disintegratable plugs, bridge plugs, cement retainers, perforation guns, ball sealers, frac balls, diverting balls, ball seats, mandrels, slips, wedges, rings, sealing plugs, frac sleeves, fracture sleeve pistons (also known as a "piston" or "piston plugs) and packers.

One or more than one part of the downhole tool, generically referred to as "downhole tool member", may be made of the branched poly(hydroxyacid) as detailed above. Alternatively, the totality of the downhole tool structure may be made of the branched poly(hydroxyacid).

The downhole tool member of the present invention usually comprises at least one element made of the branched poly(hydroxyacid) alone, however it is also possible to blend said polymer with other polymers. Examples of other polymers include polyolefin resins such as polyethylene and polypropylene; polyamide resins such as poly-L-lysine; acrylic resins; polyethers such as polyethylene glycol and polypropylene glycol; denatured polyvinyl alcohol; soft polyolefin resins such as ethylene/glycidyl methacrylate copolymers, ethylene/propylene terpolymers, and ethylene/butylene homopolymers; styrene copolymer resins; polyphenylene sulfide resins; polyether ether ketone resins; polyester resins such as polyethylene terephthalate and polybutylene terephthalate; polyacetal resins; polysulfone resins; polyphenylene ether resins; polyimide resins; polyether imide resins; cellulose esters; polyurethane resins; phenol resins; melamine resins; unsaturated polyester resins; silicone resins; and epoxy resins. Two or more types of these other polymers may be contained in the composition.

The branched poly(hydroxyacid) may also be blended with fillers.

Advantageously the downhole tool member of the invention may comprise at least one element comprising a composition comprising the branched poly(hydroxyacid) and a filler.

The nature of the filler is not particularly limited, and any filler of a fiber shape or a whisker shape may be used. A filler other than a fibrous or whisker-like filler may also be used, such as a sheet-like (stratified), powdered, or granular filler. In addition, fillers of various compositions may be used, such as carbon-based, metal-based, or silicon-based fillers.

Specific examples of fibrous or whisker-like fillers that may be used include fibrous fillers such as glass fibers (long fiber type or short fiber type chopped strands, mild fibers, or the like), Pan-type or pitch-type carbon fibers, graphite fibers, metal fibers such as aluminum fibers, brass fibers, or stainless steel fibers, alumina fibers, zirconia fibers, ceramic fibers, asbestos fibers, gypsum fibers, silicon carbide fibers, silica fibers, titanium oxide fibers, and rock wool; and whisker-like fillers such as potassium titanate whiskers, barium titanate whiskers, aluminum borate whiskers, silicon nitride whiskers, zinc oxide whiskers, calcium carbonate whiskers, wollastonite whiskers, and aluminum borate whiskers.

Examples of fillers other than fibrous or whisker-like fillers that may be used include silicates such as silicon oxide (silica, silica sand, or the like); talc, kaolin, mica, aluminosilicate, and magnesium silicate; stratified silicates; metal oxides such as magnesium oxide, alumina, zinc oxide, zirconium oxide, titanium oxide, iron oxide, antimony oxide, tungstic acid, and vanadium; sulfates such as calcium sulfate, barium sulfate, and aluminum sulfate; hydroxides such as calcium hydroxide, magnesium hydroxide, and aluminum hydroxide; clay minerals such as montmorillonite, kaolinite, beidellite, saponite, nontronite, hectorite, sauconite, vermiculite, halloysite, kanemite, octosilicate, magadiite, kenyaite, zirconium phosphate, and titanium phosphate; stratified phosphates such as hydroxyapatite; and other sheet-like, granular, or powdered inorganic fillers such as glass beads, glass balloons, ceramic beads, glass flakes, glass powder, boron nitride, silicon carbide, calcium phosphate, carbon black, and graphite.

Of these fillers, silicon oxide, silicates, carbonates, clay minerals, inorganic fibrous fillers, or inorganic whisker-like fillers are preferable, and silica sand, silica, talc, kaolin, mica, calcium carbonate, magnesium carbonate, barium carbonate, barium sulfate, montmorillonite, glass fibers, carbon fibers, or graphite fibers are particularly preferable.

Two or more types of fillers may be used in combination.

The filler is typically present in an amount of 10 to 70 weight % with respect to the total weight of the branched poly(hydroxyacid) and the filler, preferably from 10 to 60 weight %, and more preferably from 15 to 40 weight %.

The downhole tool members or the downhole tools comprising said memebers of the invention may be manufactured using known melt processing techniques, such as injection molding, extrusion or any other forming or thermoforming techniques.

The branched poly(hydroxyacid) polymer has a particularly advantageous degradation behaviour, which makes it particularly useful in the production of downhole tool members which are rapidly degraded into the ground, even at low temperatures.

Should the disclosure of any patents, patent applications, and publications which are incorporated herein by reference conflict with the description of the present application to the extent that it may render a term unclear, the present description shall take precedence.

Should the disclosure of any patents, patent applications, and publications which are incorporated herein by reference conflict with the description of the present application to the extent that it may render a term unclear, the present description shall take precedence.

The invention will be now be described in more detail with reference to the following examples, whose purpose is merely illustrative and not intended to limit the scope of the invention.

### EXAMPLES

### Example 1

A 7.5 L stainless steel double jacketed reactor, equipped with heater, condenser, temperature and pressure sensors and mechanical stirrer was charged with 4500 g of a 70 wt % of an aqueous glycolic acid solution (41.420 mole, taken as 1.0000 mol basis), 10.004 g of trimethylolpropane (0.075 mole, 0.0018 mol per mol of glycolic acid), 3.584 g of cyclohexanedimethanol (0.025 mole, 0.0006 mol per mol of glycolic acid) and 0.536 g of methanesulfonic acid (0.006 mole, 0.00014 mol per mol of glycolic acid).

The reactor was then closed and purged three times using alternatively vacuum and nitrogen. The reaction solution was heated rapidely to 50°C under mechanical stirring. Pressure was reduced to 600 mbar and heating was pursued from 50°C up to 100°C over 30 min. The water distillation was started. The temperature was slowly raised to 130°C over 60 min to gently pursue the water distillation. When most of the water was removed, the temperature was increased faster to 220°C over 30 min.

Once 220°C was reached, the pressure was progressively decreased down to 30 mbar over 30 min. Temperature was then finally raised up to 230°C and kept steady for the rest of the synthesis. The vacuum was applied for 270 min more to increase the glycolic acid conversion.

The reaction mixture was then brought back to atmospheric pressure using nitrogen. The polymer was drawn from the kettle through the bottom valve and recovered in SS trays over dry ice. The hard solidified polymer mass was taken out and weighed. Crude yield: 2.10 kg (~88 %).

The polymer was grinded into small particles with less than 2 mm diameter using a high speed grinder, classified through a 2 mm sieve and further dried in a vacuum oven at 90°C overnight.

In order to obtain an homogenuous particle size distribution and consistency, the powder was pelletized on a 19 mm diameter BRABENDER extruder, equipped with a 25 L/D monoscrew having a compression ratio of 3:1. The die was a one strand die (2 mm hole) and the strand was "die faced cut" in dry conditions. Screw speed used was 60 rpm and the temperature profile was kept low (flat temperature profile of 195 °C, 4 heating zones in the extruder; 1 heating zone in the die), to cope with the low viscosity of the pre-polymer melt polymerized. Typical output was around 2.1 kg/h. Pellet size obtained was approximately 2 mm diameter and approximately 3 mm length.

The pellets so-obtained were introduced in a double wall rotary tumbler unit for uniform mixing and further polymerization in the solid state by applying heat and pulling vacuum. The tumbler used had a 15 L total volume / 6 L useful volume. About 2 kg of polymer was used per batch.

After closing the tumbler, rotation was started at 8 rpm. The vacum pump was started to reach 5 - 10 mbar vacuum in the tumbler. Simultanuously the tumbler was flushed with nitrogen (flow rate set at 50 L/h). Oil circulating in the double wall was heated in order to ramp up the temperature from room temparture to 214 °C in 16 h.

The tumbler was equipped with a sampling valve so that a specimen of reduced quantity of the polymer could be carefully taken out to analyze the melt viscosity using a parallel plate rheometer, at different times of solid state polymerization (SSP). After achieving the desired melt viscosity, the heating was stopped, the SSP was discontinued and the product was cooled down.

After 66 hours of SSP at 214°C, 1.8 kg of a poly(glycolic acid) polymer having a melt viscosity of 647 Pa x sec at a shear rate of 10 sec⁻¹ was obtained.

The residual methanesulfonic acid in the final polymer after SSP was titrated according to the described method and found to be 0.005 mol % in regard to glycolic acid units.

### Example 2

Using the same equipment and procotol as for Example 1, a load of 4500 g of a 70 wt % of an aqueous glycolic acid solution (41.420 mole, taken as 1.0000 mol basis), 8.892 g of trimethylolpropane (0.066 mole, 0.0016 mol per mol of glycolic acid), 6.193 g of isophthalic acid (0.037 mole, 0.0009 mol per mol of glycolic acid) and 0.819 g of methanesulfonic acid (0.009 mole, 0.00021 mol per mol of glycolic acid), was converted into 2.15 kg of poly(glycolic acid) polymer (crude yield 90%).

The exact same protocole to pelletize the powder and increase melt viscosity by SSP was applied as in Example 1.

After 63 hours of SSP at 214°C, 1.8 kg of a poly(glycolic acid) polymer having a melt viscosity of 582 Pa x sec at a shear rate of 10 sec⁻¹ was obtained.

The residual methanesulfonic acid in the final polymer after SSP was titrated according to the described method and found to be 0.005 mol % in regard to glycolic acid units.

### Linear Thickness Reduction Testing

Parts having a 5 cm² base and 12.7 mm height were prepared by melt processing polymers of example 1 and 2. The parts were crystallized in an oven for 1 hour at 120°C. Then the parts were placed into 800 mL bottles with deionised water and placed in an oven at 80°C. Jars were pulled at various times and the parts were dried overnight. The following day, the parts were cut and the non-degraded section thickness was measured.

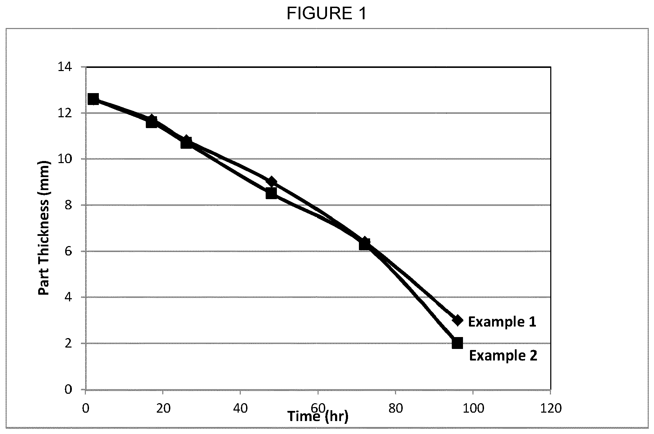

Figure 1 is a graph showing changes in thickness with time for the branched poly(hydroxyacid) polymers of Example 1 and 2.

The data shows that as time increases, degradation rate also increases, giving rise to a nonlinear curve of part thickness reduction.

The average thickness reduction rate was around 75 micron/hr for the first 24 hours of the run. The thickness reduction rate increased to around 130 micron/hr for the last 72 hours of the run.

An increase of thickness reduction rate has the advantage of faster part degradation in the well. Thus the time required for eliminating the residual parts of the tool or tool member in the well are reduced. This is particularly important in North American wells that are generally at a relatively low temperature.

## Claims

1. A downhole tool member comprising at least one element comprising: a branched poly(hydroxyacid) polymer obtained from the polycondensation reaction of a monomer mixture comprising:
(i) glycolic acid; optionally at least one hydroxyacid (A) having only one hydroxyl group and only one carboxylic acid group different from glycolic acid [hydroxyacid (A)] , in an amount of at most 5 % moles, with respect to the sum of moles of glycolic acid and hydroxy acid (A);
(ii) optionally at least one carboxylic acid having one carboxylic acid group and being free from hydroxyl group [acid (C)], and
(iii) at least one polyfunctional reactant different from hydroxyacid (A) and acid (C), [reactant (F)], selected from the group consisting of :
a. mixtures comprising at least one polyol comprising at least three hydroxyl groups and being free from carboxylic acid group [polyol (H)] and at least one polyacid selected from the aromatic acids comprising two aromatic carboxylic acid groups and being free from hydroxyl groups [polyacid (O)] and wherein: the amount of polyol (H) is such that the number of hydroxyl groups thereof is comprised between 0.050 to 1.200 % with respect to the overall number of carboxyl groups of glycolic acid and the hydroxyacid (A), if present; the amount of polyacid (O) is such that the number of carboxylic acid groups thereof is comprised between 0.050 to 0.750 % with respect to the overall number of hydroxyl groups of glycolic acid and of the hydroxy acid (A), if present; and the amount of acid (C), when present, is such that the number of carboxylic acid groups thereof is comprised between 0.0001 to 0.010 % with respect to the overall number of hydroxyl groups of glycolic acid and of the hydroxy acid (A), if present; and
b. mixtures comprising at least one polyol comprising at least three hydroxyl groups and being free from carboxylic acid group [polyol (H)] and at least one alcohol comprising one or two hydroxyl groups and being free from carboxylic acid group [alcohol (AO)].

2. The downhole tool member according to claim 1 wherein the the reactant (F) is selected from mixtures comprising at least one polyol (H) and and at least one alcohol (AO), wherein the amount of polyol (H) is such that the number of hydroxyl groups thereof is comprised between 0.050 and 1.200 % with respect to the overall number of carboxyl groups of glycolic acid and of the hydroxyacid (A), if present; the amount of alcohol (AO) is such that the number of hydroxyl groups thereof is comprised between 0.010 and 1.200 % with respect to the overall number of carboxylic groups of glycolic acid and of the hydroxyacid (A), if present; and the amount of monoacid (C), when present, is such that the number of carboxylic acid groups thereof is comprised between 0.010 and 2.0 % with respect to the overall number of hydroxyl groups of glycolic acid and of the hydroxyacid (A), if present.

3. The downhole tool member according to claim 2 wherein the hydroxyacid (A) is selected from the group consisting of lactic acid, 3-hydroxybutyric acid, 4-hydroxybutyric acid, 4-hydroxyvaleric acid, 5-hydroxyvaleric acid and 6-hydroxycaproic acid, preferably the hydroxyacid (A) is lactic acid, and/or wherein the hydroxyacid (A) is present in an amount of at most 4 % moles, more preferably of at most 3 % moles, with respect to the sum of moles of glycolic acid and of hydroxyacid (A).

4. The downhole tool member according to claim 2 or 3, wherein the polyol (H) is selected from the group consisting of: triols, in particular triols selected from the group consisting of glycerol, trimethylolpropane and trimethylolbutane, and tetraols, in particular pentaerythritol; and/or wherein the polyol (H) is used in an amount such that the number of hydroxyl groups thereof is of at least 0.050 %, preferably at least 0.075 %, more preferably of at least 0.100 %, most preferably of at least 0.120 % and/or of at most 1.200 %, preferably of at most 1.000 % and more preferably of at most 0.750 %, with respect to the overall number of carboxylic groups of glycolic acid and of the hydroxyacid (A), if present.

5. The downhole tool member according to anyone of claims 2 to 4, wherein alcohol (AO) is a diol (D), preferably a diol (D) **characterized by** a boiling point at atomospheric pressure, of at least 100°C, preferably of at least 150°C, more preferably of at least 200°C and most preferably of at least 230°C, and/or a diol (D) which is preferably used in an amount such that the number of hydroxyl groups thereof is of at least 0.010 %, preferably of at least 0.050 %, more preferably of at least 0.080 % and most preferably of at least 0.100 % and/or of at most 1.200 %, preferably of at most 0.750 %, more preferably of at most 0.650 %, with respect to the overall number of carboxylic groups of glycolic acid and of the hydroxyacid (A), if present.

6. The downhole tool member according to anyone of claims 2 to 5, wherein the alcohol (AO) is a diol (D) which is selected from the group consisting of diethyleneglycol, 1,4-cyclohexane dimethanol, isosorbide, isoidide, dodecane 1, 12-diol and mixtures thereof.

7. The downhole tool member according to anyone of claims 2 to 6, wherein acid (C) is an aliphatic monoacid of formula: R_{Hm}-COOH wherein R_{Hm} is a monovalent aliphatic group having one or more than one carbon atom, in particular having 3 or more carbon atoms, or an aromatic monoacid selected from the group consisting of benzoic acid, naphthoic acid and phenylacetic acid.

8. The downhole tool member according to claim 1 wherein the the reactant (F) is selected from mixtures comprising at least one polyol (H) and at least one polyacid (O), wherein polyol (H) is trimethylolpropane or pentaerythritol, preferably trimethylolpropane.

9. The downhole tool member according to claim 1 wherein the the reactant (F) is selected from mixtures comprising at least one polyol (H) and at least one polyacid (O), wherein polyacid (O) is isophthalic acid or terephthalic acid.

10. A downhole tool comprising a downhole tool member of anyone of the preceding claims.

11. A downhole tool member or a downhole tool of anyone of the preceding claims which is selected from the group consisting of frac plugs, disintegratable plugs, bridge plugs, cement retainers, perforation guns, ball sealers, frac balls, diverting balls, ball seats, mandrels, slips, wedges, rings, sealing plugs, frac sleeves, fracture sleeve pistons and packers.

12. A process for the manufacture of a downhole tool member or of a downhole tool of anyone of the preceding claims, said method comprising melt processing and injection molding or extruding a composition comprising a branched poly(hydroxyacid) polymer as defined in claim 1.

## Patentansprüche

1. Ein Bohrlochwerkzeugteil, umfassend mindestens ein Element, umfassend: ein verzweigtes Poly(hydroxysäure)-Polymer, erhalten aus der Polykondensationsreaktion eines Monomergemischs, umfassend:
(i) Glykolsäure; gegebenenfalls mindestens eine Hydroxysäure (A), die nur eine Hydroxylgruppe und nur eine von Glykolsäure verschiedene Carbonsäuregruppe aufweist [Hydroxysäure (A)] , in einer Menge von höchstens 5 Mol-%, bezogen auf die Summe der Molmengen von Glykolsäure und Hydroxysäure (A);
(ii) gegebenenfalls mindestens eine Carbonsäure, die eine Carbonsäuregruppe aufweist und frei von Hydroxylgruppen ist [Säure (C)], und
(iii) mindestens einen polyfunktionellen Reaktanten, der von Hydroxysäure (A) und Säure (C) verschieden ist, [Reaktant (F)], ausgewählt aus der Gruppe bestehend aus :
a. Gemischen, umfassend mindestens ein Polyol, das mindestens drei Hydroxylgruppen umfasst und frei von Carbonsäuregruppen ist [Polyol (H)], und mindestens eine Polysäure, ausgewählt aus den aromatischen Säuren, die zwei aromatische Carbonsäuregruppen umfassen und frei von Hydroxylgruppen sind [Polysäure (O)], und wobei: die Menge an Polyol (H) derart ist, dass die Anzahl seiner Hydroxylgruppen zwischen 0,050 bis 1,200 % bezogen auf die Gesamtanzahl der Carboxylgruppen von Glykolsäure und der Hydroxysäure (A), falls vorhanden, liegt; die Menge an Polysäure (O) derart ist, dass die Anzahl ihrer Carbonsäuregruppen zwischen 0,050 bis 0,750 % bezogen auf die Gesamtanzahl der Hydroxylgruppen von Glykolsäure und der Hydroxysäure (A), falls vorhanden, liegt; und die Menge an Säure (C), wenn vorhanden, derart ist, dass die Anzahl ihrer Carbonsäuregruppen zwischen 0,0001 bis 0,010 % bezogen auf die Gesamtanzahl der Hydroxylgruppen von Glykolsäure und der Hydroxysäure (A), falls vorhanden, liegt; und
b. Gemischen, umfassend mindestens ein Polyol, das mindestens drei Hydroxylgruppen umfasst und frei von Carbonsäuregruppen ist [Polyol (H)], und mindestens einen Alkohol, der eine oder zwei Hydroxylgruppen umfasst und frei von Carbonsäuregruppen ist [Alkohol (AO)].

2. Das Bohrlochwerkzeugteil nach Anspruch 1, wobei der Reaktant (F) aus Gemischen ausgewählt ist, die mindestens ein Polyol (H) und mindestens einen Alkohol (AO) umfassen, wobei die Menge an Polyol (H) derart ist, dass die Anzahl seiner Hydroxylgruppen zwischen 0,050 und 1,200 % bezogen auf die Gesamtanzahl der Carboxylgruppen von Glykolsäure und der Hydroxysäure (A), falls vorhanden, liegt; die Menge an Alkohol (AO) derart ist, dass die Anzahl seiner Hydroxylgruppen zwischen 0,010 und 1,200 % bezogen auf die Gesamtanzahl der Carbonsäuregruppen von Glykolsäure und der Hydroxysäure (A), falls vorhanden, liegt; und die Menge an Monosäure (C), wenn vorhanden, derart ist, dass die Anzahl ihrer Carbonsäuregruppen zwischen 0,010 und 2,0 % bezogen auf die Gesamtanzahl der Hydroxylgruppen von Glykolsäure und der Hydroxysäure (A), falls vorhanden, liegt.

3. Das Bohrlochwerkzeugteil nach Anspruch 2, wobei die Hydroxysäure (A) aus der Gruppe bestehend aus Milchsäure, 3-Hydroxybuttersäure, 4-Hydroxybuttersäure, 4-Hydroxyvaleriansäure, 5-Hydroxyvaleriansäure und 6-Hydroxycapronsäure ausgewählt ist, wobei die Hydroxysäure (A) vorzugsweise Milchsäure ist, und/oder wobei die Hydroxysäure (A) in einer Menge von höchstens 4 Mol-%, bevorzugter von höchstens 3 Mol-%, bezogen auf die Summe der Molmengen von Glykolsäure und Hydroxysäure (A), vorhanden ist.

4. Das Bohrlochwerkzeugteil nach Anspruch 2 oder 3, wobei das Polyol (H) aus der Gruppe bestehend aus: Triolen, insbesondere Triolen, ausgewählt aus der Gruppe bestehend aus Glycerin, Trimethylolpropan und Trimethylolbutan, und Tetraolen, insbesondere Pentaerythrit, ausgewählt ist; und/oder wobei das Polyol (H) in einer solchen Menge verwendet wird, dass die Anzahl seiner Hydroxylgruppen mindestens 0,050 %, vorzugsweise mindestens 0,075 %, bevorzugter mindestens 0,100 %, am bevorzugtesten mindestens 0,120 % und/oder höchstens 1,200 %, vorzugsweise höchstens 1,000 % und bevorzugter höchstens 0,750 %, bezogen auf die Gesamtanzahl der Carbonsäuregruppen von Glykolsäure und der Hydroxysäure (A), falls vorhanden, beträgt.

5. Das Bohrlochwerkzeugteil nach einem der Ansprüche 2 bis 4, wobei Alkohol (AO) ein Diol (D) ist, vorzugsweise ein Diol (D), **gekennzeichnet durch** einen Siedepunkt bei Atmosphärendruck von mindestens 100°C, vorzugsweise mindestens 150°C, bevorzugter mindestens 200°C und am bevorzugtesten mindestens 230°C, und/oder ein Diol (D), das vorzugsweise in einer solchen Menge verwendet wird, dass die Anzahl seiner Hydroxylgruppen mindestens 0,010 %, vorzugsweise mindestens 0,050 %, bevorzugter mindestens 0,080 % und am bevorzugtesten mindestens 0,100 % und/oder höchstens 1,200 %, vorzugsweise höchstens 0,750 %, bevorzugter höchstens 0,650 %, bezogen auf die Gesamtanzahl der Carbonsäuregruppen von Glykolsäure und der Hydroxysäure (A), falls vorhanden, beträgt.

6. Das Bohrlochwerkzeugteil nach einem der Ansprüche 2 bis 5, wobei der Alkohol (AO) ein Diol (D) ist, das aus der Gruppe bestehend aus Diethylenglykol, 1,4-Cyclohexandimethanol, Isosorbid, Isoidid, Dodecan-1,12-diol und Gemischen davon ausgewählt ist.

7. Das Bohrlochwerkzeugteil nach einem der Ansprüche 2 bis 6, wobei Säure (C) eine aliphatische Monosäure der Formel: RHₘ-COOH ist, wobei RHₘ eine einwertige aliphatische Gruppe mit einem oder mehr als einem Kohlenstoffatom, insbesondere mit 3 oder mehr Kohlenstoffatomen, ist, oder eine aromatische Monosäure, ausgewählt aus der Gruppe bestehend aus Benzoesäure, Naphthoesäure und Phenylessigsäure.

8. Das Bohrlochwerkzeugteil nach Anspruch 1, wobei der Reaktant (F) aus Gemischen ausgewählt ist, die mindestens ein Polyol (H) und mindestens eine Polysäure (O) umfassen, wobei Polyol (H) Trimethylolpropan oder Pentaerythrit, vorzugsweise Trimethylolpropan, ist.

9. Das Bohrlochwerkzeugteil nach Anspruch 1, wobei der Reaktant (F) aus Gemischen ausgewählt ist, die mindestens ein Polyol (H) und mindestens eine Polysäure (O) umfassen, wobei Polysäure (O) Isophthalsäure oder Terephthalsäure ist.

10. Ein Bohrlochwerkzeug, umfassend ein Bohrlochwerkzeugteil nach einem der vorhergehenden Ansprüche.

11. Ein Bohrlochwerkzeugteil oder ein Bohrlochwerkzeug nach einem der vorhergehenden Ansprüche, das aus der Gruppe bestehend aus Frac-Plugs, desintegrierbaren Plugs, Bridge-Plugs, Zementretainern, Perforationskanonen, Ball Sealern, Frac-Bällen, Diverting-Bällen, Ballsitzen, Dornen, Slips, Keilen, Ringen, Dichtungsplugs, Frac-Sleeves, Fracture-Sleeve-Kolben und Packern ausgewählt ist.

12. Ein Verfahren zur Herstellung eines Bohrlochwerkzeugteils oder eines Bohrlochwerkzeugs nach einem der vorhergehenden Ansprüche, wobei das Verfahren Schmelzverarbeitung und Spritzgießen oder Extrudieren einer Zusammensetzung umfasst, die ein verzweigtes Poly(hydroxysäure)-Polymer, wie in Anspruch 1 definiert, umfasst.

## Revendications

1. Un élément d'outil de fond de puits comprenant au moins un élément comprenant : un polymère de poly(hydroxyacide) ramifié obtenu à partir de la réaction de polycondensation d'un mélange de monomères comprenant :
(i) de l'acide glycolique ; éventuellement au moins un hydroxyacide (A) ayant un seul groupe hydroxyle et un seul groupe acide carboxylique différent de l'acide glycolique [hydroxyacide (A)] , en une quantité d'au plus 5 % en moles, par rapport à la somme des moles d'acide glycolique et d'hydroxyacide (A) ;
(ii) éventuellement au moins un acide carboxylique ayant un groupe acide carboxylique et étant exempt de groupe hydroxyle [acide (C)], et
(iii) au moins un réactif polyfonctionnel différent de l'hydroxyacide (A) et de l'acide (C), [réactif (F)], choisi dans le groupe constitué de :
a. mélanges comprenant au moins un polyol comprenant au moins trois groupes hydroxyle et étant exempt de groupe acide carboxylique [polyol (H)] et au moins un polyacide choisi parmi les acides aromatiques comprenant deux groupes acide carboxylique aromatiques et étant exempts de groupes hydroxyle [polyacide (O)] et dans lesquels : la quantité de polyol (H) est telle que le nombre de ses groupes hydroxyle est compris entre 0,050 et 1,200 % par rapport au nombre total de groupes carboxyle de l'acide glycolique et de l'hydroxyacide (A), s'il est présent ; la quantité de polyacide (O) est telle que le nombre de ses groupes acide carboxylique est compris entre 0,050 et 0,750 % par rapport au nombre total de groupes hydroxyle de l'acide glycolique et de l'hydroxyacide (A), s'il est présent ; et la quantité d'acide (C), lorsqu'il est présent, est telle que le nombre de ses groupes acide carboxylique est compris entre 0,0001 et 0,010 % par rapport au nombre total de groupes hydroxyle de l'acide glycolique et de l'hydroxyacide (A), s'il est présent ; et
b. mélanges comprenant au moins un polyol comprenant au moins trois groupes hydroxyle et étant exempt de groupe acide carboxylique [polyol (H)] et au moins un alcool comprenant un ou deux groupes hydroxyle et étant exempt de groupe acide carboxylique [alcool (AO)].

2. L'élément d'outil de fond de puits selon la revendication 1 dans lequel le réactif (F) est choisi parmi des mélanges comprenant au moins un polyol (H) et au moins un alcool (AO), dans lequel la quantité de polyol (H) est telle que le nombre de ses groupes hydroxyle est compris entre 0,050 et 1,200 % par rapport au nombre total de groupes carboxyle de l'acide glycolique et de l'hydroxyacide (A), s'il est présent ; la quantité d'alcool (AO) est telle que le nombre de ses groupes hydroxyle est compris entre 0,010 et 1,200 % par rapport au nombre total de groupes carboxyliques de l'acide glycolique et de l'hydroxyacide (A), s'il est présent ; et la quantité de monoacide (C), lorsqu'il est présent, est telle que le nombre de ses groupes acide carboxylique est compris entre 0,010 et 2,0 % par rapport au nombre total de groupes hydroxyle de l'acide glycolique et de l'hydroxyacide (A), s'il est présent.

3. L'élément d'outil de fond de puits selon la revendication 2 dans lequel l'hydroxyacide (A) est choisi dans le groupe constitué de l'acide lactique, de l'acide 3-hydroxybutyrique, de l'acide 4-hydroxybutyrique, de l'acide 4-hydroxyvalérique, de l'acide 5-hydroxyvalérique et de l'acide 6-hydroxycaproïque, de préférence l'hydroxyacide (A) est l'acide lactique, et/ou dans lequel l'hydroxyacide (A) est présent en une quantité d'au plus 4 % en moles, plus préférablement d'au plus 3 % en moles, par rapport à la somme des moles d'acide glycolique et d'hydroxyacide (A).

4. L'élément d'outil de fond de puits selon la revendication 2 ou 3, dans lequel le polyol (H) est choisi dans le groupe constitué de : triols, en particulier des triols choisis dans le groupe constitué du glycérol, du triméthylolpropane et du triméthylolbutane, et des tétraols, en particulier le pentaérythritol ; et/ou dans lequel le polyol (H) est utilisé en une quantité telle que le nombre de ses groupes hydroxyle est d'au moins 0,050 %, de préférence d'au moins 0,075 %, plus préférablement d'au moins 0,100 %, le plus préférablement d'au moins 0,120 % et/ou d'au plus 1,200 %, de préférence d'au plus 1,000 % et plus préférablement d'au plus 0,750 %, par rapport au nombre total de groupes carboxyliques de l'acide glycolique et de l'hydroxyacide (A), s'il est présent.

5. L'élément d'outil de fond de puits selon l'une quelconque des revendications 2 à 4, dans lequel l'alcool (AO) est un diol (D), de préférence un diol (D) **caractérisé par** un point d'ébullition à pression atmosphérique, d'au moins 100°C, de préférence d'au moins 150°C, plus préférablement d'au moins 200°C et le plus préférablement d'au moins 230°C, et/ou un diol (D) qui est de préférence utilisé en une quantité telle que le nombre de ses groupes hydroxyle est d'au moins 0,010 %, de préférence d'au moins 0,050 %, plus préférablement d'au moins 0,080 % et le plus préférablement d'au moins 0,100 % et/ou d'au plus 1,200 %, de préférence d'au plus 0,750 %, plus préférablement d'au plus 0,650 %, par rapport au nombre total de groupes carboxyliques de l'acide glycolique et de l'hydroxyacide (A), s'il est présent.

6. L'élément d'outil de fond de puits selon l'une quelconque des revendications 2 à 5, dans lequel l'alcool (AO) est un diol (D) qui est choisi dans le groupe constitué du diéthylèneglycol, du 1,4-cyclohexane diméthanol, de l'isosorbide, de l'isoïdide, du dodécane 1,12-diol et de leurs mélanges.

7. L'élément d'outil de fond de puits selon l'une quelconque des revendications 2 à 6, dans lequel l'acide (C) est un monoacide aliphatique de formule : R_{Hm}-COOH dans laquelle R_{Hm} est un groupe aliphatique monovalent ayant un ou plus d'un atome de carbone, en particulier ayant 3 atomes de carbone ou plus, ou un monoacide aromatique choisi dans le groupe constitué de l'acide benzoïque, de l'acide naphtoïque et de l'acide phénylacétique.

8. L'élément d'outil de fond de puits selon la revendication 1 dans lequel le réactif (F) est choisi parmi des mélanges comprenant au moins un polyol (H) et au moins un polyacide (O), dans lequel le polyol (H) est le triméthylolpropane ou le pentaérythritol, de préférence le triméthylolpropane.

9. L'élément d'outil de fond de puits selon la revendication 1 dans lequel le réactif (F) est choisi parmi des mélanges comprenant au moins un polyol (H) et au moins un polyacide (O), dans lequel le polyacide (O) est l'acide isophtalique ou l'acide téréphtalique.

10. Un outil de fond de puits comprenant un élément d'outil de fond de puits selon l'une quelconque des revendications précédentes.

11. Un élément d'outil de fond de puits ou un outil de fond de puits selon l'une quelconque des revendications précédentes qui est choisi dans le groupe constitué de bouchons de fracturation, bouchons désintégrables, bouchons-ponts, dispositifs de retenue de ciment, canons de perforation, obturateurs à bille, billes de fracturation, billes de dérivation, sièges de bille, mandrins, coins d'ancrage, cales, anneaux, bouchons d'étanchéité, manchons de fracturation, pistons de manchon de fracturation et garnitures d'étanchéité.

12. Un procédé de fabrication d'un élément d'outil de fond de puits ou d'un outil de fond de puits selon l'une quelconque des revendications précédentes, ledit procédé comprenant le traitement à l'état fondu et le moulage par injection ou l'extrusion d'une composition comprenant un polymère de poly(hydroxyacide) ramifié tel que défini dans la revendication 1.
